# EUROPÄISCHE PATENTANMELDUNG

(11) **EP 2 735 732 A2**
(43) Veröffentlichungstag der Anmeldung: **28.05.2014**
(21) Anmeldenummer: 13193698.1
(22) Anmeldetag: 20.11.2013
(51) Int. Cl.: F03D 1/06

(54) **Windenergieanlagenkomponente**

(30) Priorität: 21.11.2012 DE 102012111219
(71) Anmelder: Spitzner Engineers GmbH, 21684 Stade (DE)
(72) Erfinder: Spitzner, Jörg, 22549 Hamburg (DE); Bhatia, Ramon, 22549 Hamburg (DE)
(74) Vertreter: Hansen, Jochen

(57) **Zusammenfassung**

Die Erfindung betrifft ein Kopplungselement (1, 1', 1") für ein Rotorblatt einer Windenergieanlage zur Verbindung eines Rotorblattes (2) oder Rotorblattabschnittes (21) mit einer Nabe (3) einer Windenergieanlage oder - zur Verbindung von Rotorblattabschnitten (21, 22) eines geteilt ausgebildeten Rotorblattes mit einem Rotorblattabschnitt (21) und einem weiteren Rotorblattabschnitt (22), wobei das Rotorblatt (2) in einer Kunststoff-Faser Bauweise hergestellt ist, das Kopplungselement (1) in die Rotorblattstruktur (20) einlaminiert / verklebt / eingearbeitet ist, Verstärkungsfasern (11) in transversaler Richtung (X) innerhalb der Rotorblattstruktur (20) angeordnet sind, so dass auftretende Kräfte auf diese Verstärkungsfasern (11) übergeleitet werden, das Kopplungselement (1) Koppelaufnahmen (12) zur Verbindung mit der Nabe (3) oder eines weiteren Kopplungselementes (1', 1") auf der Befestigungsseite (13) im Ansatzstutzen (12) aufweist, und das Kopplungselement (1) eine hohe Festigkeit aufweist.

## Beschreibung

Die Erfindung betrifft ein Kopplungselement für ein Rotorblatt einer Windenergieanlage zur Verbindung eines Rotorblattes oder Rotorblattabschnittes mit einer Nabe einer Windenergieanlage oder zur Verbindung von Rotorblattabschnitten eines geteilt ausgebildeten Rotorblattes mit einem Rotorblattabschnitt und einem weiteren Rotorblattabschnitt, wobei das Rotorblatt in einer Kunststoff-Faser Bauweise hergestellt ist, das Kopplungselement in die Rotorblattstruktur einlaminiert ist, Verstärkungsfasern in transversaler Richtung innerhalb der Rotorblattstruktur angeordnet sind, so dass die auftretenden Kräfte auf diese Verstärkungsfasern übergeleitet werden, das Kopplungselement Koppelaufnahmen zur Verbindung mit der Nabe oder eines weiteren Kopplungselementes auf der Befestigungsseite im Ansatzstutzen aufweist, wobei diese als Bohrungen, Schraub-, Steck- und/oder Klemmverbindungen ausgebildet sind, und das Kopplungselement eine hohe Festigkeit aufweist, und aus Stahl oder einem kohlenstofffaserverstärkten Kunststoff besteht.

Für die Verbindung eines Rotorblattes einer Windenergieanlage mit einer Nabe, einem Blattlager, etwaigen Verlängerungen oder Adaptern sowie zur Verbindung von einzelnen Rotorblattabschnitten miteinander werden im Wesentlichen Kombinationen von Längs- und Querbolzen verwendet, die die einzelnen Bauteile bzw. Bauteilabschnitte miteinander verbinden. Hierbei werden die Längsbolzen in die Querbolzen eingeschraubt, wobei die Querbolzen bereits in Querbohrungen innerhalb des Rotorblatt-Verbindungsbereiches eingesetzt sind und eine entsprechende Bohrung mit Gewinde aufweisen. Hierzu sei auf die Ausführungen in Windkraftanlagen von Erich Hau, 2. Auflage, erschienen im Springer Verlag Heidelberg New York 1996, S. 206ff verwiesen.

Aus der Druckschrift DE 199 62 989 B4 ist ein Kopplungsmittel zur Verbindung eines geteilten Rotorblattes bekannt, wobei hierbei die zwei Rotorblattabschnitte mittels Spannvorrichtungen an einer Teilungsfuge über angeordnete Laschen, die wiederum an Befestigungspunkten befestigt sind, miteinander verbunden sind.

Weiter ist aus der Druckschrift EP 1 584 817 A1 ein zwei oder mehrfach geteilt ausgebildetes Windenergieanlagenblatt bekannt, dessen einzelne Abschnitte miteinander über Verbindungselemente miteinander verbunden werden, wobei die Verbindungselemente im Wesentlichen Verbindungsplatten ähneln, die mittels Nut bzw. Feder miteinander verbunden werden und diese Verbindungsplatten im Verstärkungsbereich der Rotorblattoberfläche angeordnet sind.

Die Druckschrift US 2009/0208341 A1 offenbart ein in transversaler Richtung ein- oder mehrfach geteiltes Rotorblatt einer Windenergieanlage, wobei die Verbindung der einzelnen Rotorblattabschnitte miteinander über Koppelelemente realisiert ist und diese über Metallelemente in der tragenden Struktur der Rotorblätter befestigt sind.

Aus der Druckschrift WO 03/082551 A1 ist bekannt, dass im Bereich des Anschlusses zur Nabe Inlays aus Metall in die Rotorblattstruktur eingearbeitet bzw. einlaminiert werden. Hierbei wird ein metallischer Ring, der bevorzugt eine vergrößerte Oberfläche aufweist, die über Erhebungen oder Vertiefungen realisiert ist, während der Rotorblattherstellung von dessen Außenseite einlaminiert.

Ferner ist aus der Druckschrift EP 1 950 414 A2 eine Verbindungsanordnung zur Herstellung einer Verbindung zweier Rotorblattabschnitte bekannt, wobei hier mittels in Bohrlöchern angeordnete Befestigungsmittel vorgeschlagen werden.

Aus der Druckschrift EP 2 199 604 A2 ist ein aus mehreren Abschnitten bestehendes Rotorblatt für eine Windenergieanlage bekannt, wobei die Verbindung der einzelnen Abschnitte mittels Koppelelementen verbunden sind und diese Koppelelemente zumindest teilweise mit dem Körper der Rotorblattstruktur eine dauerhafte Verbindung eingehen.

Weiter ist aus der Druckschrift EP 1 798 412 A2 bekannt, in ein Rotorblatt, das im Wesentlichen aus Glasfaser-verstärktem Kunststoff gefertigt ist, Verstärkungsfasern aus Kohlenstoff einzuarbeiten, um eine bessere Haltbarkeit im Bereich der Anbindung an die Nabe der Windenergieanlage zu gewährleisten, wobei die Kohlenstofffasern höhere Kräfte als Glasfasern aufnehmen können.

Aus der Druckschrift DE 10 2011 003 602 A1 ist ein Sicherungssystem für ein Rotorblatt einer Windenergieanlage bekannt, bei dem im Inneren eines Rotorblattes über dessen Längserstreckung Hauptstrangelemente angeordnet sind, die mit der Rotorblattwurzel verbunden sind und im Bedarfsfall bei einem Versagen der Rotorblattstrukturen die Fragmente auffangen bzw. zusammenhalten können.

Problematisch an den bisher im Stand der Technik bekannten Lösungen ist der Umstand, dass alle Lösungen nur begrenzt anwendbar sind. Insbesondere sind sämtliche Lösungen für größere Rotorblattlängen nicht mehr einsetzbar, da die bei größeren Rotorblattlängen auftretenden Kräfte die entsprechenden Verbindungen zerstören würden bzw. deren Standzeit äußerst kurz wäre.

Ein weiteres Problem ist der sehr große Einsatz von Material an GFK, glasfaserverstärktem Kunststoff, der im Wurzelbereich derzeit verwendet wird, um den Wurzelbereich eines Rotorblattes entsprechend statisch ausreichend zu dimensionieren.

Stellt man sich nun konkret die Aufgabe, eine ausreichende Verbindung des Rotorblattes an die Nabe zu realisieren bzw. eine Verbindung einzelner Rotorblattabschnitte eines Rotorblattes miteinander herzustellen, wobei insbesondere der Verbindungsbereich möglichst gering dimensioniert werden soll, scheinen die im Stand der Technik bekannten Lösungen hier nicht weiterführend zu sein.

Speziell im Fall von großen Windenergieanlagen mit Rotordurchmessern über 80 m werden derzeit zwar Kohlenstofffasern zur Verstärkung verbaut, jedoch sind diese nicht effektiv in der Lasteinleitung, so dass es zu Brüchen und Abrissen im Ansatzbereich kommen kann. Insbesondere führt eine direkte Lastanbindung an die Nabe durch einfaches Verbinden der Kohlenstofffaserverstärkungen im Ansatzbereich der Nabe nicht zu einer idealen Lasteinleitung, was sich letztendlich auf die Standzeit und die Sicherheit einer derartigen Windenergieanlage negativ auswirkt.

Die Aufgabe der Erfindung besteht daher darin, ein Kopplungselement für ein Rotorblatt einer Windenergieanlage anzugeben, dass eine ideale Krafteinleitung gewährleistet und zudem die Standzeit als auch die Sicherheit gegen Abriss eines derartigen Rotorblattes erhöht.

Gelöst wird diese Aufgabe mit einem Kopplungselement nach Anspruch 1, nämlich dadurch, dass das Kopplungselement die Querschnittsform des am Einbauort im Rotorblatt/-abschnitt vorliegenden Querschnittes, eine Kreis- oder Kastenform aufweist und das Kopplungselement Aufnahmen für die in transversaler Richtung das Rotorblatt/-abschnitt durchziehenden Verstärkungsfasern aufweist, wobei die Aufnahmen am Befestigungsseiten-fernen Ende des Kopplungselementes angeordnet sind.

Hierdurch ist einerseits eine ideale Lasteinleitung und homogene Lastanbindung an die Nabe gewährleistet und anderseits lassen sich auf diese Weise unterschiedliche Rotorblattabschnitte miteinander hocheffizient miteinander verbinden. Folglich ist es nunmehr möglich sehr lange Rotorblätter abschnittsweise vorzufertigen und diese dann nacheinander an Ort und Stelle an die Windenergieanlage anzubauen, wobei die Lastübertragung von den einzelnen Rotorblattabschnitten zum nächsten bzw. letztendlich bis zur Nabe nahezu ideal ist und zudem die Dicke im Bereich der Ansätze durch Reduktion des GFK's stark reduziert wird, was letztendlich ein immenser Gewichtsvorteil ist, der sich in einer höheren Leistung der Anlage wiederspiegelt.

Die Verstärkungsfasern werden gurtartig über die Aufnahme an dem Kopplungselement geführt, so dass die auftretenden Kräfte äußerst effizient in die Nabe eingeleitet werden. Die Verstärkungsfasern sind Kohlenstofffasern, die unidirektional in transversaler Richtung des Rotorblattes geführt sind.

Insgesamt ist von einer überdurchschnittlichen Stärkung der Rotorblattstruktur auszugehen, wobei komplett auf nachträglich einzubringende Bohrungen und Nachlaminierungen verzichtet werden kann, so dass die Montagezeit an Ort und Stelle erheblich reduziert werden kann und zudem unabhängig von der Witterung ist, da lediglich im Inneren des Rotorblattes Verschraubungen vorgenommen werden müssen.

Weitere besondere Ausgestaltungen der Erfindung sind den Unteransprüchen zu entnehmen.

Bei einer Bauweise mit einem Steg sind der Ober- und der Untergurt oberhalb und unterhalb des Steges angeordnet, sodass diese zusammen mit dem Steg einen Doppel-T-Träger bilden.

Bei einer Kastenbauweise sind die Ober- und Untergurte über den mit Kernwerkstoff gefüllten Zwischenräumen der Kästen angeordnet. Dadurch werden aus den Seitenwänden der Kästen, dem Kernwerkstoff dazwischen sowie den Gurten zwei Doppel-T-Träger gebildet.

Bei einer Bauweise mit einem Biegetorsionskasten liegen die Gurte in den Ecken des Kastens, um die auftretenden Lasten aufzunehmen.

Insbesondere ist das Kopplungselement in dessen transversaler Ausdehnung am Befestigungsseiten-fernen Ende kronenförmig mit Zacken ausgebildet, wobei die Zacken die Aufnahmen für die Verstärkungsfasern aufweisen. Hierdurch wird eine weitere Optimierung der Krafteinleitung bzw. Kraftübertragung auf die Nabe erzielt, so dass hier nunmehr noch größere bzw. leichtere Rotorblätter konstruiert und eingesetzt werden können.

Das Kopplungselement ist in Differentialbauweise ausgebildet, wobei die Zacken zweigeteilt sind und ein Zackenabschnitt abnehmbar ist, wobei der abnehmbare Zackenabschnitt die Aufnahme für die Verstärkungsfasern aufweist.

Die Verstärkungsfasern sind an der Aufnahme eines der abnehmbaren Zackenabschnitte eines Kopplungselementes oder über zwei abnehmbare Zackenabschnitte, nämlich eines ersten und eines zweiten Kopplungselementes, als einlaminierbare Verstärkungsfasergurte vorproduziert. Hierdurch können die vorproduzierten und genau auf Länge vorkonfektionierten Verstärkungsfasergurte mit den Aufnahmen zwischen zwei bestimmte Kopplungselemente eingespannt werden, die dann im Anschluss mit GFK zu einem Rotorblatt in Schalenbauweise endgefertigt werden.

Die Verstärkungsfasern sind über einen Sandwichkern derart geführt, dass der Sandwichkern zwischen den hin- und den rücklaufenden Verstärkungsfasern liegt und die Verstärkungsfasern beabstandet werden. Hierdurch werden die Verstärkungsfasern in einem ausreichenden Bogen über die Aufnahme geführt, so dass deren Belastung im Bereich der Aufnahme nur minimal gegen Scher- und Knickbelastungen ist.

Wenn das Kopplungselement zwei oder mehrteilig ausgebildet ist, kann das Kopplungselement in zwei oder mehr vorbereitete Schalenteile einer später zusammenzufügenden Rotorblattes zur Montage eingelegt werden.

Die Oberfläche des Kopplungselementes weist eine strukturierte Oberfläche zur besseren Anbindung der auf die Oberfläche aufzubringenden kunststofffaserverstärkten Lagen auf, wobei diese Strukturierung durch Erhebungen, Vertiefungen, Rillen und/oder Nuten gebildet ist.

Das Kopplungselement besteht aus Aluminium, Stahl oder einem kohlenstofffaserverstärkten Kunststoff. Insbesondere ist es besonders vorteilhaft, wenn die Kopplungselemente in der Mitte bzw. zur Spitze des Rotorblattes aus Aluminium gefertigt werden, da hierdurch die bewegte Masse geringer gehalten wird, als wenn das Kopplungselement aus einem Material mit höherer Dichte besteht. Zudem lässt sich Aluminium sehr leicht durch thermisches Fügen, beispielsweise durch Reib-Rührschweißen sowie entsprechende Orbitalschweißvorrichtungen miteinander zusammenfügen.

Die Kopplungselemente werden am Ort der Aufstellung der Windenergieanlagen an Ort und Stelle durch ein thermisches Fügeverfahren miteinander bestimmungsgemäß verbunden. Hierbei zeigt sich, dass insbesondere das bereits zuvor genannte Reib-Rührschweißverfahren besonders vorteilhaft einzusetzen ist, da lediglich geringe Oberflächentemperaturen während des Schweißprozesses entstehen.

Die Koppelaufnahmen der Kopplungselemente sind als Bohrungen, Schraub-, Steck- und/oder Klemmverbindungen ausgebildet, so dass diese auf einfachste Weise an Ort und Stelle beim Aufbau der Windenergieanlage bzw. beim Ansetzen der einzelnen Rotorblattabschnitte miteinander verbunden werden können.

Nachfolgend werden Ausführungsbeispiele der Erfindung anhand der beiliegenden Zeichnungen detailliert beschrieben.

Darin zeigen:
- Fig. 1: eine schematische Darstellung eines ersten Ausführungsbeispiels des erfindungsgemäßen Kopplungselementes und der Verstärkungsfasern in Kombination mit einem zweiten erfindungsgemäßen Kopplungselement;
- Fig. 2: eine schematische Darstellung des Grundaufbaus eines erfindungsgemäßen Kopplungselementes in Kronenform mit Zacken;
- Fig. 3: eine schematische Darstellung des Grundaufbaus eines erfindungsgemäßen Kopplungselementes in Kronenform mit Zacken und Aufnahmen für die Verstärkungsfasern;
- Fig. 4: eine schematische Darstellung des Grundaufbaus eines erfindungsgemäßen Kopplungselementes in Kronenform mit Zacken in einer Seitenansicht;
- Fig. 5: eine schematische Darstellung des Grundaufbaus eines erfindungsgemäßen Kopplungselementes in Kronenform mit Zacken in einer Draufsicht von der Befestigungsseite aus;
- Fig. 6: eine schematische Darstellung des erfindungsgemäßen Kopplungselementes mit den in der Aufnahme an den Zacken befindlichen Verstärkungsfasern;
- Fig. 7: eine schematische Darstellung eines weiteren Ausführungsbeispiels des erfindungsgemäßen Kopplungselementes in einem Grundaufbau zur Verbindung zweier Rotorblattabschnitte miteinander;
- Fig. 8: eine schematische Darstellung eines weiteren Ausführungsbeispiels des erfindungsgemäßen Kopplungselementes in einem Grundaufbau zur Verbindung zweier Rotorblattabschnitte miteinander, wobei hier die Zacken Aufnahmen für die Verstärkungsfasern aufweisen;
- Fig. 9: eine schematische Darstellung eines weiteren Ausführungsbeispiels des erfindungsgemäßen Kopplungselementes in einem Grundaufbau zur Verbindung zweier Rotorblattabschnitte miteinander, wobei die Verstärkungsfasern in den Aufnahmen angeordnet sind;
- Fig. 10: eine schematische Darstellung eines weiteren Ausführungsbeispiels des erfindungsgemäßen Kopplungselementes in einem Grundaufbau zur Verbindung zweier Rotorblattabschnitte miteinander, in einem Querschnitt;
- Fig. 11: eine schematische Darstellung eines weiteren Ausführungsbeispiels des erfindungsgemäßen Kopplungselementes in einem Grundaufbau zur Verbindung zweier Rotorblattabschnitte miteinander, in einer Seitenansicht;
- Fig. 12: eine schematische Darstellung eines vorproduzierten und vorkonfektionierten Verstärkungsfasergurtes;
- Fig. 13: eine Detaildarstellung des aus Fig. 12 dargestellten vorproduzierten und vorkonfektionierten Verstärkungsfasergurtes;
- Fig. 14: eine schematische Darstellung eines Zackenabschnittes in einem Querschnitt;
- Fig. 15: eine schematische Darstellung eines Zackenabschnittes in einer Seitenansicht;
- Fig. 16: eine schematische Darstellung eines Zackenabschnittes in einer Draufsicht mit Darstellung der Aufnahme;
- Fig. 17: eine schematische Darstellung einer Windenergieanlagennabe mit drei daran angeordneten Rotorblättern, jeweils mit Darstellung der inneren Struktur;
- Fig. 18: eine schematische Detaildarstellung der Windenergieanlagennabe aus Figur 17 mit einem daran angeordneten Rotorblatt, mit ausschließlicher Darstellung der inneren Verstärkungsstruktur;
- Fig. 19: eine schematische Darstellung eines Kopplungselementes zur Verbindung zweier Rotorblattabschnitte;
- Fig. 20: eine schematische Darstellung eines weiteren Kopplungselementes zur Verbindung zweier Rotorblattabschnitte, als Gegenstück zu dem Kopplungselement aus Fig. 19;
- Fig. 21: eine schematische Darstellung der Kopplungselemente aus Fig. 19 und 20 zusammengesetzt;
- Fig. 22: eine schematische Darstellung eines weiteren Ausführungsbeispiels eines Kopplungselementes, wobei hierbei ein zweigeteiltes Kopplungselement vorliegt und lediglich eine Halbschale dargestellt ist;
- Fig. 23: eine schematische Darstellung der Rotorblattstruktur in Differentialbauweise, wobei nur eine Halbschale gezeigt ist;
- Fig. 24: eine schematische Darstellung der Rotorblattstruktur in Differentialbauweise;
- Fig. 25: eine Detaildarstellung der Rotorblattstruktur in Differentialbauweise;
- Fig. 26: eine Detaildarstellung der Anbindung der Verstärkungsfasern aus Fig. 25;
- Fig. 27: eine schematische Darstellung eines weiteren Ausführungsbeispiels eines Kopplungselementes, wobei hierbei ein zweigeteiltes Kopplungselement vorliegt und lediglich eine Halbschale dargestellt ist;
- Fig. 28: eine schematische Darstellung eines weiteren Ausführungsbeispiels einer erfindungsgemäßen Rotorblattstruktur mit einem Rotorblattstrukturkasten;
- Fig. 29: eine schematische Darstellung eines Ausführungsbeispiels einer erfindungsgemäßen Rotorblattstruktur mit einem Rotorblattstrukturkasten und
- Fig. 30: eine schematische Darstellung eines Ausführungsbeispiels einer erfindungsgemäßen Rotorblattstruktur mit einem Rotorblattstruktursteg.

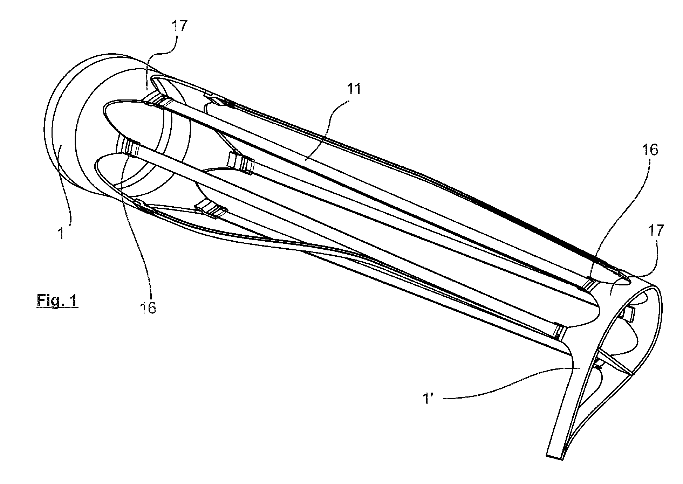

In Fig. 1 ist eine schematische Darstellung eines ersten Ausführungsbeispiels des erfindungsgemäßen Kopplungselementes 1 und der Verstärkungsfasern 11 in Kombination mit einem zweiten erfindungsgemäßen Kopplungselement 1' dargestellt.

Das Kopplungselement 1 besteht aus einem der Querschnittsform des am Einbauort am Rotorblatt 2/-Abschnitt 21, 22 vorliegenden Querschnittes entsprechenden Raumstruktur, die aus einem Stahl, Gusstahl oder Kohlefaser verstärktem Kunststoff besteht und zudem eine hohe bis sehr hohe Festigkeit aufweist.

Das Kopplungselement 1 ist zudem kronenförmig ausgebildet und weist Zacken 17 auf. Die Zacken 17 weisen Aufnahmen 16 zur Aufnahme von über die Aufnahmen 16 geführten Verstärkungsfasern 11 auf. Die Verstärkungsfasern 11 sind Kohlenstofffasern, die in unidirektionaler Richtung das Rotorblatt 2 durchziehen und dieses verstärken.

Die auf das Rotorblatt 2 wirkenden Kräfte werden auf die Verstärkungsfasern 11 im Inneren der Rotorblattstruktur 20 abgeleitet und entlang der Verstärkungsfasern bis in das Kopplungselement 1 geführt, wo die Kräfte in die Nabe 3 eingeleitet werden.

Des weiteren ist auf der zweiten Seite der Verstärkungsfasern 11 ein weiteres Kopplungselement 1' vorgesehen, das zur Verbindung zweier Rotorblattabschnitte 21, 22 miteinander dient.

Im Weiteren werden für gleiche Elemente die gleichen Bezugszeichen wie in Fig. 1 verwendet. Zu deren prinzipieller Funktion wird auf Fig. 1 verwiesen.

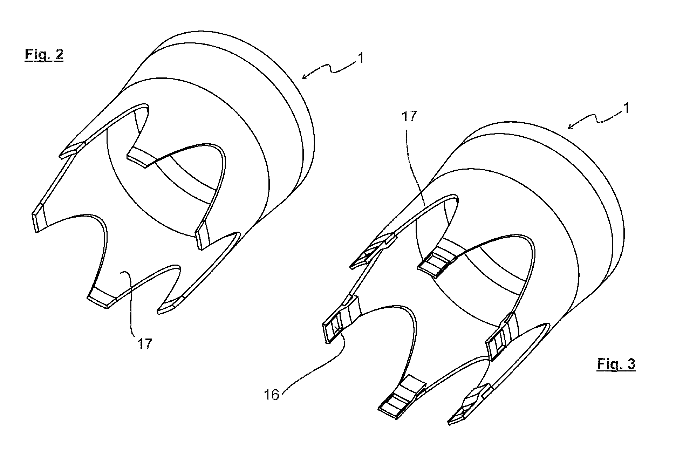

Fig. 2 zeigt eine schematische Darstellung des Grundaufbaus eines erfindungsgemäßen Kopplungselementes 1 in Kronenform mit Zacken 17.

In Fig. 3 ist eine schematische Darstellung des Grundaufbaus eines erfindungsgemäßen Kopplungselementes 1 in Kronenform mit Zacken 17 und Aufnahmen für die Verstärkungsfasern 11 dargestellt.

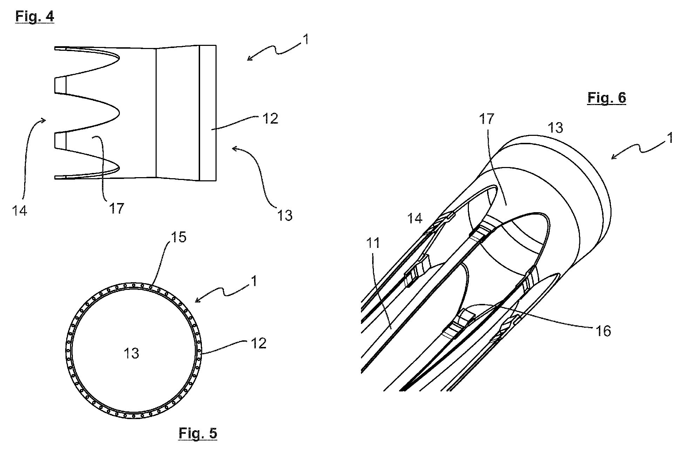

Fig. 4 zeigt eine schematische Darstellung des Grundaufbaus eines erfindungsgemäßen Kopplungselementes 1 in Kronenform mit Zacken 17 in einer Seitenansicht.

Das Kopplungselement 1 weist auf der Befestigungsseite 13 einen Ansatzstutzen 12 auf, der in diesem Ausführungsbeispiel eine Vielzahl von Bohrungen 15 aufweist, die dazu dienen, um Bolzen die an der Nabe 3 herausragen, aufzunehmen. Die bei der späteren Montage in die Bohrungen 15 eindringenden Bolzen der Nabe 3 werden dann mit entsprechenden Sicherungsmuttern während des Einbaus eines entsprechend ausgestatteten Rotorblattes 2 bzw. Rotorblattabschnittes 21 gesichert, so dass die auftretenden Kräfte auf die Nabe 3 übertragen werden.

Fig. 5 zeigt eine schematische Darstellung des Grundaufbaus eines erfindungsgemäßen Kopplungselementes 1 in Kronenform mit Zacken 17 in einer Draufsicht von der Befestigungsseite 13 aus.

Fig. 6 zeigt eine schematische Darstellung des erfindungsgemäßen Kopplungselementes 1 mit den in der Aufnahme 16 an den Zacken 17 befindlichen Verstärkungsfasern 11.

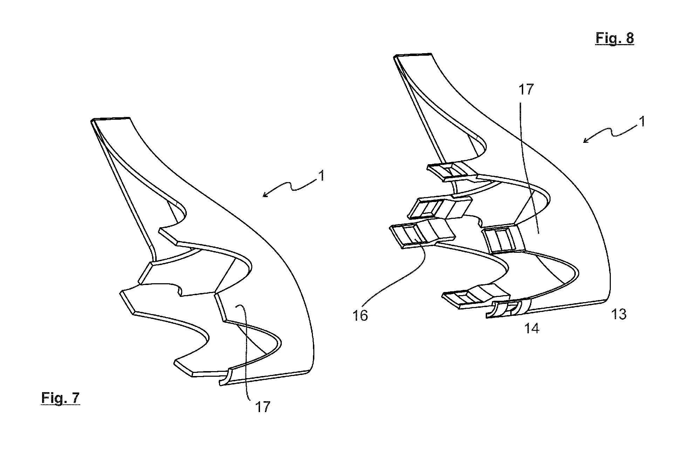

In Fig. 7 ist eine schematische Darstellung eines weiteren Ausführungsbeispiels des erfindungsgemäßen Kopplungselementes 1 in einem Grundaufbau zur Verbindung zweier Rotorblattabschnitte 21, 22 miteinander dargestellt.

Die Kopplungselemente 1 bzw. im weiteren 1' werden miteinander über Bolzen verschraubt, wobei die Bolzen in Bohrungen 15 der Kopplungselemente 1, 1' eingebracht werden.

Fig. 8 zeigt eine schematische Darstellung eines weiteren Ausführungsbeispiels des erfindungsgemäßen Kopplungselementes 1 in einem Grundaufbau zur Verbindung zweier Rotorblattabschnitte 21, 22 miteinander, wobei hier die Zacken 17 Aufnahmen 16 für die Verstärkungsfasern 11 aufweisen.

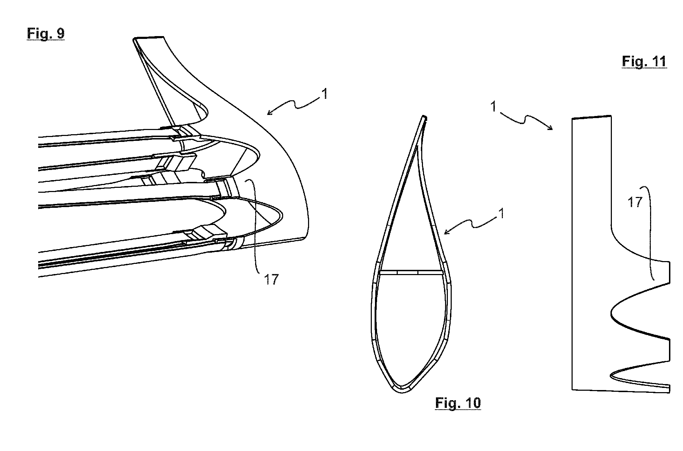

Fig. 9 ist eine schematische Darstellung eines weiteren Ausführungsbeispiels des erfindungsgemäßen Kopplungselementes 1 in einem Grundaufbau zur Verbindung zweier Rotorblattabschnitte 21, 22 miteinander, wobei die Verstärkungsfasern 11 in den Aufnahmen 16 angeordnet sind.

Der Querschnitt des Kopplungselementes 1 zur Verbindung zweier Rotorblattabschnitte 21, 22 weist den inneren Querschnitt des Rotorblattes 2 auf, wobei das Kopplungselement 1 an der entsprechenden Stelle des Rotorblattes 2 einlaminiert ist.

Fig. 10 zeigt eine schematische Darstellung eines weiteren Ausführungsbeispiels des erfindungsgemäßen Kopplungselementes 1 in einem Grundaufbau zur Verbindung zweier Rotorblattabschnitte 21, 22 miteinander, in einem Querschnitt.

Fig. 11 ist eine schematische Darstellung eines weiteren Ausführungsbeispiels des erfindungsgemäßen Kopplungselementes 1 in einem Grundaufbau zur Verbindung zweier Rotorblattabschnitte 21, 22 miteinander, in einer Seitenansicht.

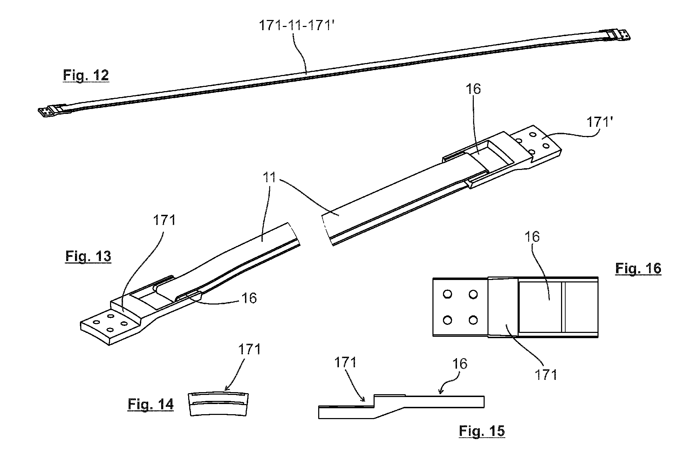

Fig. 12 ist eine schematische Darstellung eines vorproduzierten und vorkonfektionierten Verstärkungsfasergurtes 171-11-171'.

Ein derartiger vorproduzierter und vorkonfektionierter Verstärkungsfasergurt 171-11-171' kann in großen Stückzahlen durch Drittunternehmen vorproduziert werden und einfach gehandhabt werden. Der vorproduzierte und vorkonfektionierte Verstärkungsfasergurt 171-11-171' wird dann zwischen zwei Kopplungselemente 1, 1' eingebaut und entsprechend vorgespannt.

Fig. 13 zeigt eine Detaildarstellung des aus Fig. 12 dargestellten vorproduzierten und vorkonfektionierten Verstärkungsfasergurtes 171-11-171'.

Fig. 14 ist eine schematische Darstellung eines Zackenabschnittes 171 in einem Querschnitt.

Der Zackenabschnitt 171 ist leicht gewölbt ausgebildet. Die Aufnahme 16 in dem Zackenabschnitt 171 ist derart ausgestaltet, dass die Verstärkungsfasern 11 nicht in einem zu geringen Radius geführt werden.

Fig. 15 ist eine schematische Darstellung eines Zackenabschnittes 171 in einer Seitenansicht.

Fig. 16 zeigt eine schematische Darstellung eines Zackenabschnittes 171 in einer Draufsicht mit Darstellung der Aufnahme 16.

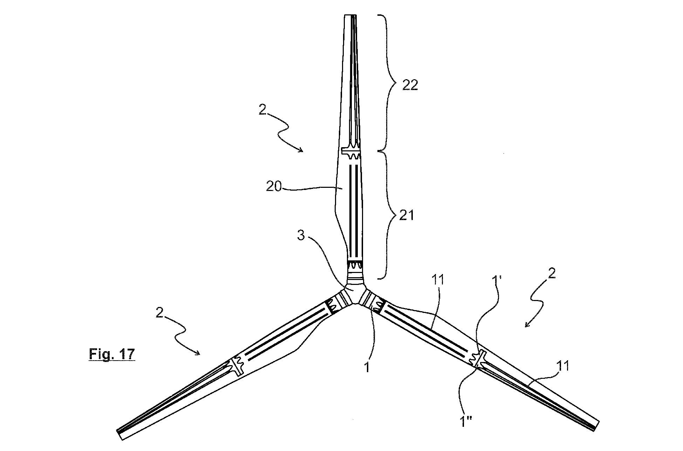

Fig. 17 ist eine schematische Darstellung einer Windenergieanlagennabe 3 mit drei daran angeordneten Rotorblättern 2, jeweils mit Darstellung der inneren Struktur.

Jeweils ein Rotorblatt 2 besteht aus zwei Rotorblattabschnitten 21, 22. Der Rotorblattabschnitt 21 weist zwei Kopplungselemente 1 und 1' auf, wobei diese durch Verstärkungsfasern 11 miteinander erfindungsgemäß verbunden sind.

Die Kopplungselemente 1, 1' sind in der Rotorblattstruktur 20 des Rotorblattes 2 in der üblichen GFK-Struktur eingearbeitet.

Der zweite Rotorblattabschnitt 22 weist lediglich ein Kopplungselement 1" auf, an dem frei endende Verstärkungsfasern 11 angeordnet sind.

Die Verbindung der zwei Rotorblattabschnitte 21 und 22 wird durch eine simple Bolzenverbindung der zwei Kopplungselemente 1' und 1" realisiert, die auf einfachste Weise an Ort und Stelle der Windenergieanlage hergestellt werden kann. So können beispielsweise zunächst die ersten Rotorblattabschnitte 21 an die Nabe angesetzt werden und im Weiteren erst die weiteren Rotorblattabschnitte 22 an die Enden der ersten Rotorblattabschnitte 21. Alternativ kann auch rotorblattweise das Rotorblatt 2 durch zunächst den Anbau des ersten Rotorblattabschnittes 21 an die Nabe 3, gefolgt durch den Anbau des zweiten Rotorblattabschnittes 22 an den ersten Rotorblattabschnitt 21, erfolgen.

Nach dem Zusammenbau der beiden Rotorblattabschnitte 21, 22 ist kein weiteres Finishing notwendig. Insbesondere bedarf es keiner weiteren Laminierarbeiten in schwindelerregender Höhe zur Abdichtung etwaiger Übergänge. Die beiden Rotorblattabschnitte 21 ,22 können über die Kopplungselemente 1' und 1", bevorzugt mit einer Dichtmasse, abgedichtet werden.

Da die einzelnen Rotorblattabschnitte 21, 22 nicht die volle Rotorblattlänge haben, sind diese Rotorblattabschnitte 21, 22 auch deutlich geringer anfällig für Windböen während der Montage.

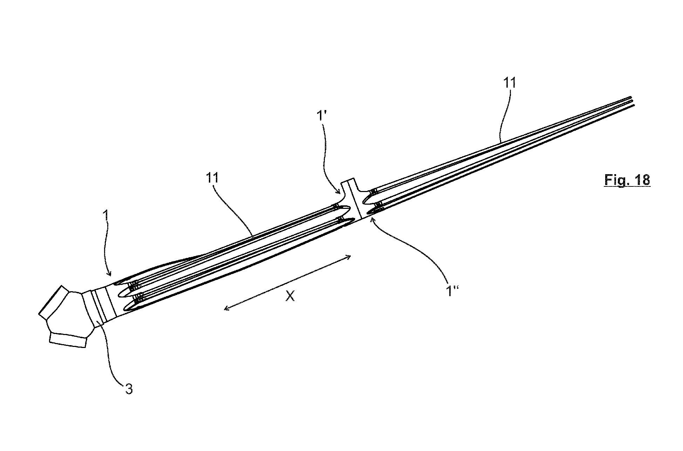

Fig. 18 zeigt eine schematische Detaildarstellung der Windenergieanlagennabe 3 aus Figur 17 mit einem daran angeordneten Rotorblatt 2, mit ausschließlicher Darstellung der inneren Verstärkungsstruktur.

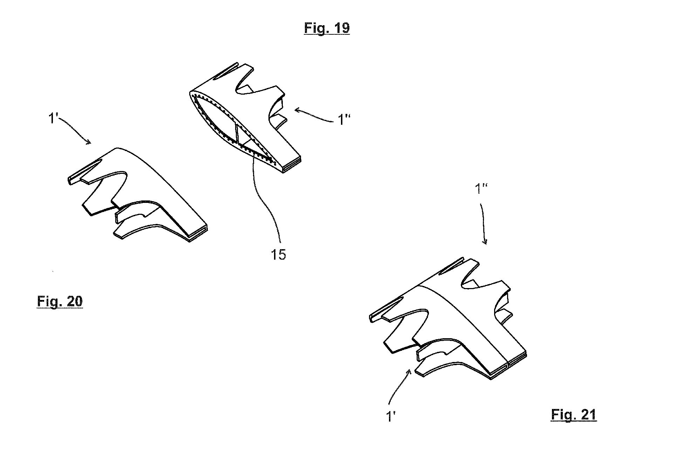

Fig. 19 ist eine schematische Darstellung eines Kopplungselementes 1" zur Verbindung zweier Rotorblattabschnitte 21 ,22.

In dieser Darstellung sind die bei allen Kopplungselementen 1, 1' und 1" vorhandenen Bohrungen 15 in dem Ansatzstutzen 12 dargestellt.

Fig. 20 zeigt eine schematische Darstellung eines weiteren Kopplungselementes 1' zur Verbindung zweier Rotorblattabschnitte 21, 22, als Gegenstück zu dem Kopplungselement 1" aus Fig. 19.

Fig. 21 zeigt eine schematische Darstellung der Kopplungselemente 1' und 1" aus Fig. 19 und 20 zusammengesetzt, wobei die beiden Kopplungselemente 1' und 1" durch eine Bolzenverbindung miteinander verbunden sind.

Da die Rotorblätter 2 entsprechende Innendimensionierungen aufweisen, so dass ein Mann sich dort frei bewegen kann, stellt es kein Problem dar die beiden Rotorblattabschnitte 21, 22 an Ort und Stelle miteinander zu verbinden.

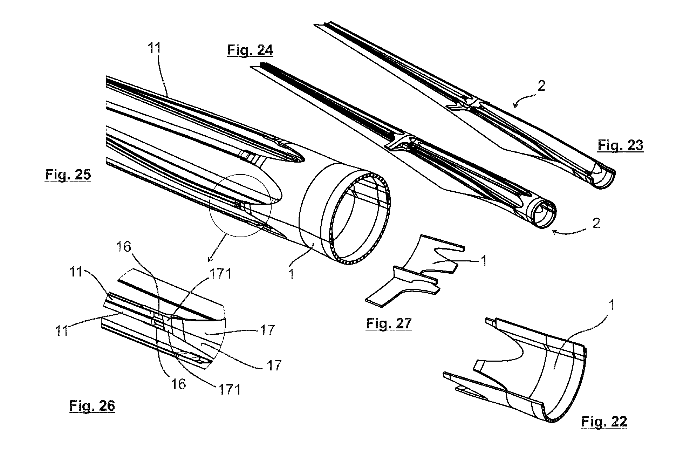

Fig. 22 ist eine schematische Darstellung eines weiteren Ausführungsbeispiels eines Kopplungselementes 1, wobei hierbei ein zweigeteiltes Kopplungselement 1 vorliegt und lediglich eine Halbschale dargestellt ist.

Fig. 23 ist eine schematische Darstellung der Rotorblattstruktur 20 in Differentialbauweise, wobei nur eine Halbschale gezeigt ist.

Fig. 24 zeigt eine schematische Darstellung der Rotorblattstruktur 20 in Differentialbauweise, wobei hier beide Einzelhälften des Rotorblattes 2 erfindungsgemäß aufeinander liegen.

Fig. 25 ist eine Detaildarstellung der Rotorblattstruktur 20 in Differentialbauweise.

Die Verstärkungsfasern 11 sind im Bereich der Zusammenführung der beiden Kopplungselementhälften 1 geteilt ausgeführt, so dass eine Hälfte der Verstärkungsfasern 11 in der unteren Hälfte des Kopplungselementes 1 in eine Aufnahme 16 geführt ist und eine weitere Hälfte in der oberen Hälfte des Kopplungselementes 1 in eine Aufnahme 16 geführt ist.

Fig. 26 ist eine Detaildarstellung der Anbindung der Verstärkungsfasern 11 aus Fig. 25, aus der der Verbindungsbereich der beiden Hälften des Kopplungselementes 1 und somit auch der beiden Hälften der Rotorblattstruktur 20 zu erkennen ist.

Fig. 27 zeigt eine schematische Darstellung eines weiteren Ausführungsbeispiels eines Kopplungselementes 1, wobei hierbei ein zweigeteiltes Kopplungselement 1 vorliegt und lediglich eine Halbschale dargestellt ist. Dieses Kopplungselement dient zur Verbindung zweier Rotorblattabschnitte 21, 22 miteinander.

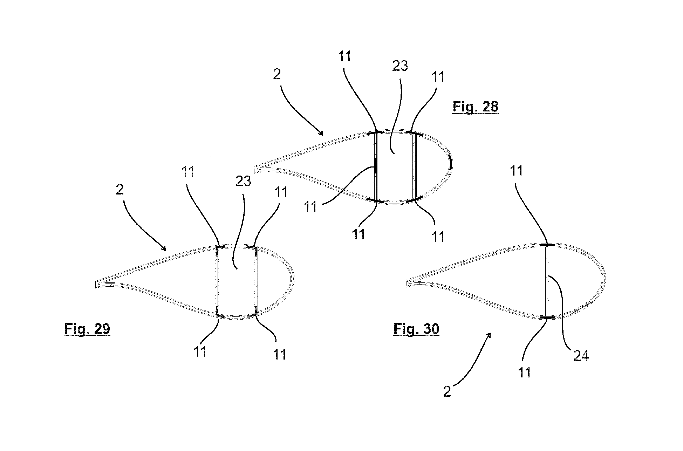

In Fig. 28 ist eine schematische Darstellung eines weiteren Ausführungsbeispiels einer erfindungsgemäßen Rotorblattstruktur 20 mit einem Rotorblattstrukturkasten 23 dargestellt, wobei in diesem Ausführungsbeispiel fünf Verstärkungsfasergurte 171-11-171', jeweils an den Ecken und zusätzlich an dem rückwärtigen Steg an dem Rotorblattstrukturkasten 23 zur Verstärkung angeordnet sind, wobei diese Verstärkungsfasern 11 an das Kopplungselement 1 erfindungsgemäß angebunden sind.

Fig. 29 zeigt eine schematische Darstellung eines weiteren Ausführungsbeispiels einer erfindungsgemäßen Rotorblattstruktur 20 mit einem Rotorblattstrukturkasten 23 und vier, jeweils an den Ecken angeordneten Verstärkungsfasern 11 bzw. aus Verstärkungsfasern 11 bestehenden Gurten.

Fig. 30 zeigt eine schematische Darstellung eines Ausführungsbeispiels einer erfindungsgemäßen Rotorblattstruktur 20 mit einem Rotorblattstruktursteg 24 mit einem oberen und einem unteren Verstärkungsfaser bzw. Verstärkungsfasergurt 171-11-171'.

### Bezugszeichenliste

- 1,1', 1": Kopplungselement
- 11: Verstärkungsfasern
- 12: Koppelaufnahme/Ansatzstutzen
- 13: Befestigungsseite
- 14: Befestigungsseiten-fernen Ende
- 15: Bohrungen
- 16: Aufnahme
- 17: Zacken
- 171: Zackenabschnitt
- 171-11-171': Verstärkungsfasergurt

- 2: Rotorblatt
- 20: Rotorblattstruktur
- 21, 22: Rotorblattabschnitt
- 23: Rotorblattstrukturkasten
- 24: Rotorblattstruktursteg

- 3: Nabe
- X: transversale Richtung

## Patentansprüche

1. Kopplungselement (1, 1', 1") für ein Rotorblatt einer Windenergieanlage
- zur Verbindung eines Rotorblattes (2) oder Rotorblattabschnittes (21) mit einer Nabe (3) einer Windenergieanlage
oder
- zur Verbindung von Rotorblattabschnitten (21, 22) eines geteilt ausgebildeten Rotorblattes mit einem Rotorblattabschnitt (21) und einem weiteren Rotorblattabschnitt (22),
wobei
- das Rotorblatt (2) in einer Kunststoff-Faser Bauweise hergestellt ist,
- das Kopplungselement (1) in die Rotorblattstruktur (20) einlaminiert / verklebt / eingearbeitet ist,
- Verstärkungsfasern (11) in transversaler Richtung (X) innerhalb der Rotorblattstruktur (20) angeordnet sind, so dass auftretende Kräfte auf diese Verstärkungsfasern (11) übergeleitet werden,
- das Kopplungselement (1) Koppelaufnahmen (12) zur Verbindung mit der Nabe (3) oder eines weiteren Kopplungselementes (1 1") auf der Befestigungsseite (13) im Ansatzstutzen (12) aufweist,
und
- das Kopplungselement (1) eine hohe Festigkeit aufweist,
**dadurch gekennzeichnet, dass**
- das Kopplungselement (1, 1', 1") die Querschnittsform des am Einbauort im Rotorblatt (2) / -abschnitt (21, 22) vorliegenden Querschnittes, eine Kreis- oder Kastenform aufweist
und
- das Kopplungselement (1, 1', 1") Aufnahmen (16) für die in transversaler Richtung (X) das Rotorblatt (2) / -abschnitt (21, 22) durchziehenden Verstärkungsfasern (11) aufweist, wobei die Aufnahmen (16) am Befestigungsseiten-fernen Ende (14) des Kopplungselementes (1) angeordnet sind.

2. Kopplungselement (1) nach Anspruch 1,
**dadurch gekennzeichnet, dass**
das Kopplungselement (1) in dessen transversaler Ausdehnung (X) am Befestigungsseiten-fernen Ende (14) kronenförmig mit Zacken (17) ausgebildet ist, wobei die Zacken (17) die Aufnahmen (16) für die Verstärkungsfasern (11) aufweisen.

3. Kopplungselement (1) nach Anspruch 2,
**dadurch gekennzeichnet, dass**
das Kopplungselement (1) in Differentialbauweise ausgebildet ist, wobei die Zacken (17) zweigeteilt sind und ein Zackenabschnitt (171) abnehmbar ist, wobei der abnehmbare Zackenabschnitt (171) die Aufnahme (16) für die Verstärkungsfasern (11) aufweist.

4. Kopplungselement (1) nach Anspruch 3,
**dadurch gekennzeichnet, dass**
die Verstärkungsfasern (11) an dem abnehmbaren Zackenabschnitt (171) eines Kopplungselementes (1)
oder
über zwei abnehmbare Zackenabschnitte (171, 171'), nämlich eines ersten (1) und eines zweiten Kopplungselementes (1'),
als einlaminierbare Verstärkungsfasergurte (171-11-171') vorproduziert sind.

5. Kopplungselement (1) nach einem der vorangehenden Ansprüche,
**dadurch gekennzeichnet, dass**
die Verstärkungsfasern (11) über einen Sandwichkern derart geführt sind, dass der Sandwichkern zwischen den hin- und den rücklaufenden Verstärkungsfasern (11) liegt und die Verstärkungsfasern (11) beabstandet.

6. Kopplungselement (1) nach einem der vorangehenden Ansprüche,
**dadurch gekennzeichnet, dass**
das Kopplungselement (1) zwei oder mehrteilig ausgebildet ist.

7. Kopplungselement (1) nach einem der vorangehenden Ansprüche,
**dadurch gekennzeichnet, dass**
die Oberfläche des Kopplungselementes (1) eine strukturierte Oberfläche zur besseren Anbindung der auf die Oberfläche aufzubringenden kunststofffaserverstärkten Lagen aufweist, wobei diese Strukturierung durch Erhebungen, Vertiefungen, Rillen und/oder Nuten gebildet ist.

8. Kopplungselement (1) nach einem der vorangehenden Ansprüche,
**dadurch gekennzeichnet, dass**
das Kopplungselement (1, 1', 1") aus Aluminium, Stahl oder einem kohlenstofffaserverstärkten Kunststoff besteht.

9. Kopplungselement (1) nach einem der vorangehenden Ansprüche,
**dadurch gekennzeichnet, dass**
die Kopplungselemente (1, 1', 1") durch ein thermisches Fügeverfahren miteinander bestimmungsgemäß verbunden sind.

10. Kopplungselement (1) nach einem der vorangehenden Ansprüche,
**dadurch gekennzeichnet, dass**
die Koppelaufnahmen (12) der Kopplungselemente (1, 1', 1") als Bohrungen (15), Schraub-, Steck- und/oder Klemmverbindungen ausgebildet sind.
